# EUROPEAN PATENT APPLICATION

(11) **EP 1 612 793 A2**
(43) Date of publication of application: **04.01.2006**
(21) Application number: 05253938.4
(22) Date of filing: 24.06.2005
(51) Int. Cl.: G11B 27/00, G11B 15/087, H04N 5/7826

(54) **A recording apparatus and a recording method**

(30) Priority: 30.06.2004 JP 2004193477
(71) Applicant: CANON KABUSHIKI KAISHA, Ohta-ku, Tokyo (JP)
(72) Inventor: Nakajima, Hirofumi, Tokyo (JP)
(74) Representative: Legg, Cyrus James Grahame

(57) **Abstract**

There is provided a recording apparatus for recording moving-image data by forming a number of tracks on a tape-shaped recording medium, the recording apparatus including a input unit for inputting moving-image data, a coding unit for variable-length encoding the moving-image data, a memory unit for storing the moving-image data encoded by the coding unit in a memory, a error correction coding unit for performing a error correction coding process to the moving-image data stored in the memory, in the data unit corresponding to N tracks where N is an integer greater than or equal to two, and a recording unit for recording the error correction coding processed moving-image data on the tape-shaped recording medium, wherein the recording unit stops a recording process in the data unit of N tracks after recording the moving-image data of a predetermined picture in accordance with a designation of a recording stop, and wherein the memory unit continuously holds the data of the N tacks including the moving-image data of the predetermined picture after the recording stop.

## Description

### BACKGROUND OF THE INVENTION

### Field of the Invention

The present invention relates to a recording apparatus and recording method for recording image data.

### Description of the Related Art

Conventionally, an apparatus which records image data, which is encoded by variable length encoding method, on a plurality of tracks of a magnetic tape is known (e.g., Japanese Patent Laid-Open No. 2001-29135 (foreign counterpart, United States Patent Publication No. 2002/0003947 A1). In an MPEG system, on account of performing a coding and decoding process in the unit of GOP (Group Of Pictures) which consists of a predetermined numbers of forward Predictive-coded (P) pictures (frames) and Bidirectionally-predictive-coded (B) pictures and one of Intra-coded (I) picture, a concatenated-record (i.e., recording continuously from a part already recorded) is performed in a data unit of the GOP.

The apparatus which performs error correction coding process in a data unit corresponding to N tracks on a tape and records the error correction coding processed data on the tape is known (e.g., Japanese Patent Laid-Open No. 2000-134568 (foreign counterpart, United States Patent No. 6,560,401).

In Japanese Patent Laid-Open No. 2000-134568, the apparatus which can start a concatenated-record in a data unit of the GOP is disclosed.

In the above-mentioned patent, the concatenated-record can perform in a data unit of the GOP. However, before starting concatenated-record, the data of N tracks, including data of concatenated-record start point, from a tape must be reproduced and be stored in a memory.

Therefore, in cases, i.e., video camera, where photography was temporarily discontinued and then started again after that by the concatenated-record, the data of the recording stop position needed to be reproduced by rewinding the tape. Therefore, there was a problem that photography could not be started immediately after discontinuation of photography.

### SUMMARY OF THE INVENTION

In view of the above problems in the conventional art, the present invention provides a recording apparatus which can start a recording immediately after a recording stop, and in cases where it performs concatenated-record in a unit smaller than the unit of error correction coding.

According to an aspect of the present invention, there is provided a recording apparatus for recording moving-image data on a plurality of tracks on a tape-shaped recording medium, the apparatus comprising: an input unit arranged to receive moving-image data; a coding unit arranged to encode the moving-image data using a predetermined coding system using a variable-length coding; a memory unit arranged to store the encoded moving-image data; an error correction coding unit arranged to perform error correction coding of the encoded moving-image data stored in the memory unit in a data unit corresponding to a predetermined number of tracks; a recording unit arranged to record the error correction coded moving-image data onto the recording medium; a control unit arranged to control the recording unit so as to stop a recording process in the data unit after recording the moving-image data of a predetermined picture of the predetermined encoding system in accordance with a recording stop instruction, and to control the memory unit so as to store the moving-image data of the data unit including the moving-image data of the predetermined picture, after the recording stop instruction; and wherein, in the case where recording is recommenced after receiving a recording stop instruction, the control unit is further arranged to store new moving-image data adjacent the moving-image data of the predetermined picture stored in the memory unit, and to control the error correction coding unit so as to perform error correction coding of the encoded moving-image data of the data unit including the new moving-image data, and to control the recording unit so as to record the error correction coded moving-image data of the data unit a. including the new moving image data onto the recording medium.

According to a second aspect of the present invention there is provided a recording method for recording moving-image data on a plurality of tracks on a tape-shaped recording medium, the recording method comprising: receiving moving-image data; encoding the moving-image data using a predetermined coding system using a variable-length coding; storing the encoded moving-image data; performing error correction coding of the stored encoded moving-image data in a data unit corresponding to a predetermined number of tracks; recording the error correction coded moving-image data onto the recording medium; stopping a recording process in the data unit after recording the moving-image data of a predetermined picture of the predetermined encoding system in accordance with a recording stop instruction; storing the moving-image data of the data unit including the moving-image data of the predetermined picture, after the recording stop instruction; and, wherein recording is recommenced after receiving a recording stop instruction, the method further comprises: storing new moving-image data adjacent the moving-image data of the predetermined picture stored in the memory unit; performing error correction coding of the encoded moving-image data of the data unit including the new moving image data; and recording the error correction coded moving-image data of the data unit including the new moving image data onto the recording medium.

Further features and advantages of the present invention will become apparent from the following description of exemplary embodiments with reference to the attached drawings.

### BRIEF DESCRIPTION OF THE DRAWINGS

Fig. 1 shows an exemplary arrangement of the recording apparatus of the present invention.

Fig. 2 shows an exemplary arrangement of the memory of the recording apparatus of the present invention.

Fig. 3 shows a time change of the unit accessed for the memory bank corresponding to each ECC unit of the TM area at the time of recording.

Fig. 4 shows the state of a concatenated-record start position.

Fig. 5 shows a time change of the unit accessed for the memory bank corresponding to each ECC unit of the TM area at the time of concatenated-record.

### DESCRIPTION OF THE EMBODIMENTS

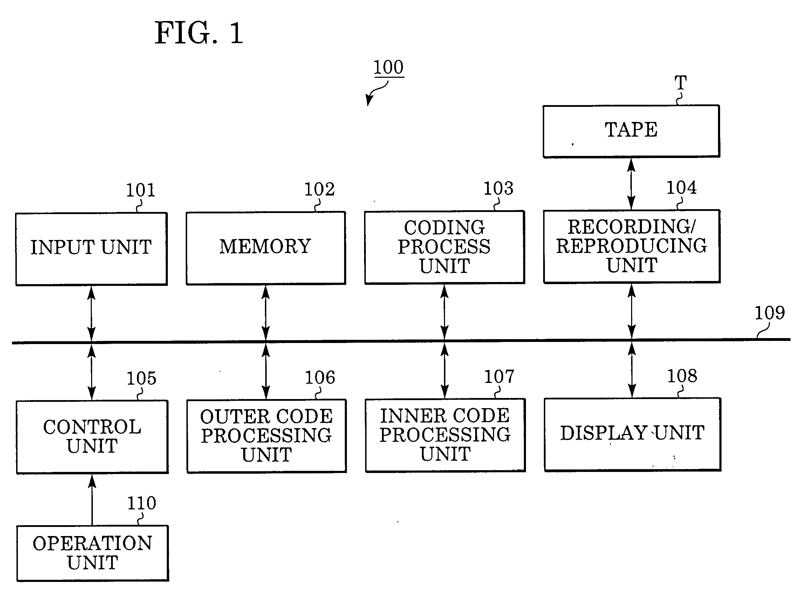

Fig. 1 shows the arrangement of the recording apparatus of the present invention.

A recording apparatus 100 of this embodiment encodes the inputted moving-image data by an MPEG-2 coding method, performs an error correction coding process in a unit of the recording data for 16 tracks, and records the encoded moving-image data on a number of tracks of a tape. The MPEG-2 coding method is a variable length encoding method which encodes the moving-image data by using an intra-picture coding and an inter-picture predictive coding selectively.

First, the current state of the art recording processing is explained.

The moving-image data inputted by an input unit 101 is written once in a memory 102 via a bus 109. A coding processing unit 103 reads the moving-image data from the memory 102, and stores the moving-image data, encoded by the MPEG-2 coding method, in the memory 102 again.

In order to perform an error correction coding process of a product code in a unit (herein expressed as an ECC unit) of the recording data for 16 tracks in the present embodiment, an outer code processing unit 106 reads the moving-image data, which is encoded by MPEG coding, from the memory 102, and adds outer code parity data to the moving-image data. The moving-image data to which the inner code parity data is added is then stored in the memory 102. After the outer code processing is completed, an inner code processing is performed by an inner code processing unit 107 for the moving-image data stored in the memory 102, and inner code parity data is added to the moving-image data. The moving-image data to which the inner and outer parity data is added is then stored in the memory 102.

After the error correction coding process is completed, a recording/reproducing unit 104 reads the moving-image data to which the error correction coding process is performed from the memory 102, and forms a synchronous block by adding various kinds of additional data (e.g., synchronization data and ID data for every data of a predetermined amount to the moving-image data). Next, the recoding/reproducing unit 104 performs a digital-modulation process for the synchronous block and records them on helical tracks formed on tape T by using a rotary magnetic head.

In this embodiment, one GOP is formed in 15 frames units, and the P picture is inserted every three frames in one GOP (the P picture of one frame, and the B pictures of two frames). Auxiliary data with respect to the image data of the three frames is added every three frames, and the image data to which the auxiliary data is added is recorded on the tape T.

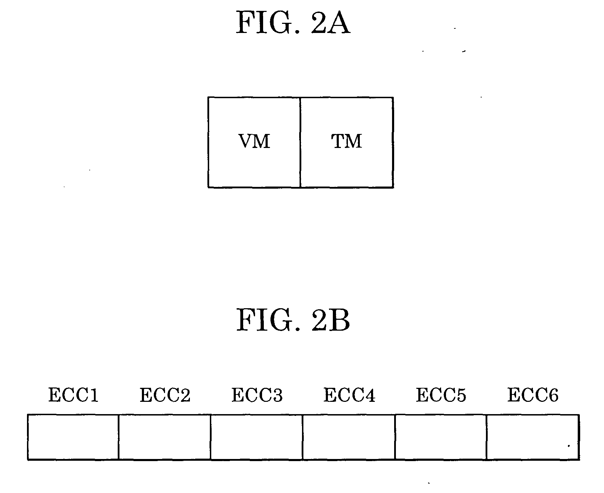

Fig. 2 shows an exemplary arrangement of memory 102. The memory 102 has a video memory (VM) area for storing the image data which has not been encoded, and a track memory (TM) area for storing the image data which has been encoded by the MPEG coding method. The VM area has the capacity to store the image data of the number of frames which is required for one GOP in order to perform the MPEG coding. The TM area has the capacity to store the image data, encoded by the MPEG coding method, for six ECC units. In the TM area, one ECC unit works as one memory bank, and the writing and the reading processing are independently possible.

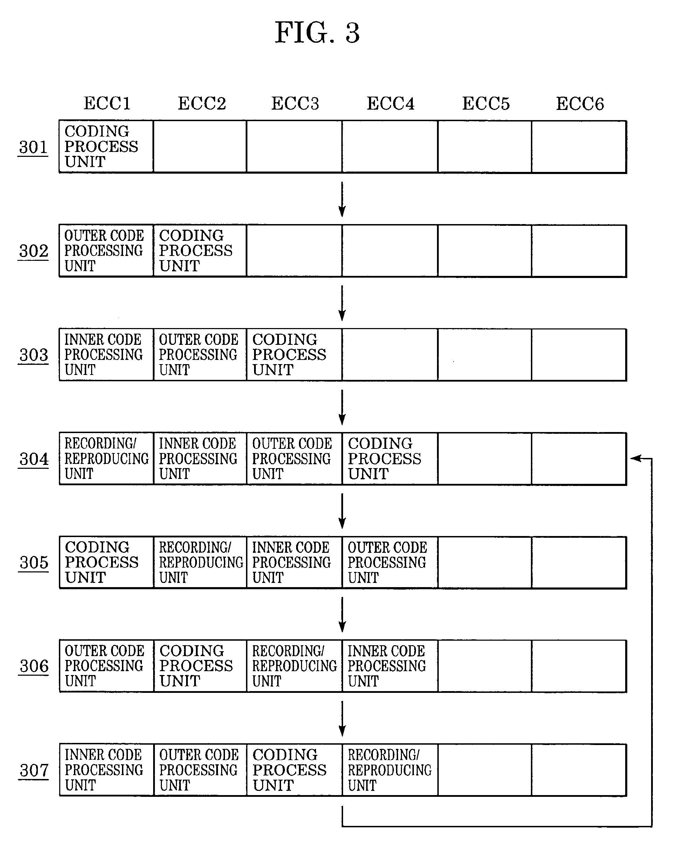

Next, the state of the stored data of the TM area at the time of recording is shown in Fig. 3.

Fig. 3 shows a time change of the processing unit accessed for the memory bank corresponding to each ECC unit of the TM area at the time of recording.

Timing 301 shows the timing of a recording start. In timing 301, the coding processing unit 103 is writing the image data (hereinafter referred to as MPEG data) encoded by the coding processing unit 103 in ECC unit 1. After the writing of the MPEG data to the ECC unit 1 is completed, in timing 302, the outer code processing unit 106 accesses the ECC unit 1, and performs the error correction coding processing of the outer code for the MPEG data. The coding processing section 103 writes the MPEG data in ECC unit 2.

Then, in timing 303, the inner code processing unit 108 performs inner code processing for the ECC unit 1, the outer code processing unit 106 performs outer code processing for the ECC unit 2, and the coding processing section 103 writes the MPEG data in ECC unit 3.

In timing 304, the recording/reproducing section 104 reads the data written in the ECC unit 1, and records the data on the tape T. The inner code processing unit 107 performs inner code processing for the ECC unit 2, the outer code processing unit 106 performs outer code processing for the ECC unit 3, and the coding processing unit 103 writes the MPEG data in ECC unit 4.

In the following, as shown in timing 305-307, each processing unit carries out sequential access for each data of the ECC unit 1 to the ECC unit 4. After timing 307, each processing unit returns to the state of the timing 304.

Thus, in the state where image data is being recorded, if there is designation of a recording stop from the operation unit 110, the control unit 105 stops recording in the unit of data of the I picture or the P picture immediately after the designation of the recording stop. Then, the control unit 105 controls the memory 102 to write null data in the remaining portion of the ECC unit after the data of the I picture or P picture last recoded. Furthermore, the control unit 105 controls the memory to write the null data in all areas of the next ECC unit. And after recording the ECC unit containing the last I picture or P picture and the next ECC unit comprised of the null data, the control unit 105 controls the memory 102 and the recording/reproducing unit 104 to stop recording.

Next, the processing at the time of reproduction is described.

If there is designation of a reproduction start from the operation unit 110, the control unit 105 controls the recording/reproducing unit 104 to reproduce the image data from the tape T, and writes the reproduced image data in the memory 102. The recording/reproducing unit 104 has a mechanism for conveying the tape T.

The error correction decoding processing is performed to the reproduced image data stored by memory 102, by using the inner code processing unit 107 and the outer code processing unit 106, and then the error correction decoded image data is written in memory 102. The error correction processed MPEG data is decoded by the coding processing unit 103, and is written in the memory 102. The image data stored in the memory 102 is outputted to the display unit 108 and displayed.

At the time of reproducing process, like the time of recording process, when each processing unit performs sequential access for each memory bank of the ECC unit which comprises the TM area of the memory 102, the reproducing process is performed.

Next, the processing at the time of the concatenated-record is described.

In this embodiment, as mentioned above, while recording the image data, if there is designation of a record stop by the operation unit 110, the record of the image data is stopped. If there is designation of a recording start after that, the concatenated-record processing which records the image data continuously from a record stop position is performed.

In this embodiment, the moving-image is encoded by the MPEG coding method and is recorded. Since variable length coding is performed in the MPEG coding method, the code amounts of the encoded moving-image data are different for every picture. Therefore, a recording stop position of the I picture or P picture last recorded may be located in the middle of a track at the time of the recording stop.

In this embodiment, even if it is a case where recording of the I picture or the P picture data is stopped in the middle of a track, the concatenated-record is performed so that the moving image data is recorded from the recording stop position of the I picture or the P picture continuously.

Here, it is considered as the case where the last data of the P picture immediately after recording stop designation was stored in ECC unit 2 of Fig. 3, for example. That is, the state of timing 305 of Fig. 3 is presumed. The control unit 105 writes the null data in the ECC unit 2 after the last data of the P picture. The null data is written in the next ECC unit (ECC unit 3).

After processing the error correction coding for the data of these two ECC units and recording the processed data on the tape, the recording is stopped by stopping conveyance of the tape. This state is in the state of timing 305 in Fig. 3. In order to prepare for concatenated record, the control unit 105 rewinds the tape T the length corresponding to the two ECC units and the tracks of a predetermined number required for tracking, and stops.

After performing the recording stop, the control unit 105 holds the moving-image data stored in the ECC unit 2 containing the last data at the time of the recording stop.

If there is designation of a recording start in the above-mentioned state, processing of MPEG coding by the coding processing unit 103 will be started. The control unit 105 transfers the MPEG data from the head of the ECC unit 3 of the memory 102 to the P picture last recorded to the ECC unit 1. And in the ECC unit 1, the control unit 105 controls the coding processing unit 103 to write new MPEG data after the data of the last P picture.

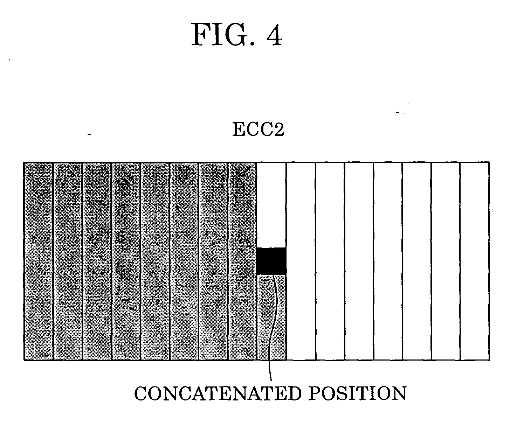

The image on the track of the MPEG data stored in the ECC unit 2 of the present embodiment is shown in Fig. 4.

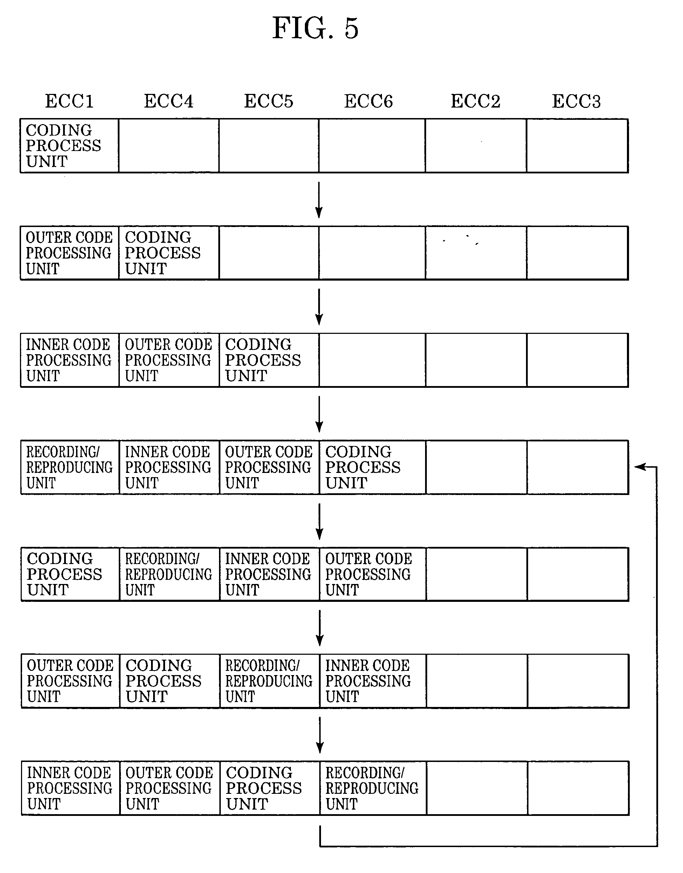

As shown in Fig. 5, the error correction coding processing is performed sequentially for the data of the ECC unit 1, and the conveyance of the tape T is started. The concatenated-record is started by newly overwriting the data of the ECC unit 1 on the track on which the data of the ECC unit 2 was recorded just before the recording stop. Then, as shown in Fig. 5, the encoding process and recording process are performed continuously by using four memory banks of ECC units 1, 4, 5 and 6.

Thus, in the present embodiment, at the time of the recording stop, the data of the ECC unit containing the MPEG data last recorded is held continuously in memory after the recording stop. By writing new MPEG data continuously from the MPEG data last recoded in the ECC unit, it becomes unnecessary to rewind the tape in order to reproduce the MPEG data of a concatenated-record part, and it becomes possible to perform the concatenated-record quickly.

In present embodiment, when a concatenated-record is started, the MPEG data from the head of the ECC unit 2 to the P picture last recorded is transferred to the ECC unit 1, and then new MPEG data is written in the ECC unit 1 after the MPEG data of the P picture last recorded. Without transferring data to the ECC unit 1, writing new MPEG data after the data of P picture last recorded in the ECC unit 3 may be compromised.

In the present embodiment, address management is performed for the data stored in the memory 102. Memory 102 has an area that stores the management data of the address management. A desired data storage position can be determined from the memory 102 by the management data. For example, the area information of each ECC unit, the data storage place of each picture stored in the ECC unit, and the data storage place of the picture last recorded are included in the management data. The storage position of the moving-image data last recorded can be obtained by referring to the management data.

The example described in the present embodiment was a case where the moving-image data performed the error correction coding processing by 16 track units was recorded. The present invention however, is not limited to the above-described embodiment. In cases where the moving-image data with which the error correction coding processing is performed by N tracks unit (N being an integer equal to or greater than two) is recorded, this invention can be similarly applied.

After the recording stop, in cases where the power supply of an apparatus is turned off without performing concatenated record or the tape T is ejected, the moving-image data of the ECC unit containing the data at the time of the record stop held in memory is deleted.

While the present invention has been described with reference to exemplary embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A recording apparatus for recording moving-image data on a plurality of tracks on a tape-shaped recording medium, the apparatus comprising:
an input unit arranged to receive moving-image data;
a coding unit arranged to encode the moving-image data using a predetermined coding system using a variable-length coding;
a memory unit arranged to store the encoded moving-image data; an error correction coding unit arranged to perform error correction coding of the encoded moving-image data stored in the memory unit in a data unit corresponding to a predetermined number of tracks;
a recording unit arranged to record the error correction coded moving-image data onto the recording medium;
a control unit arranged to control the recording unit so as to stop a recording process in the data unit after recording the moving-image data of a predetermined picture of the predetermined encoding system in accordance with a recording stop instruction, and to control the memory unit so as to store the moving-image data of the data unit including the moving-image data of the predetermined picture, after the recording stop instruction; and
wherein, in the case where recording is recommenced after receiving a recording stop instruction, the control unit is further arranged to store new moving-image data adjacent the moving-image data of the predetermined picture stored in the memory unit, and to control the error correction coding unit so as to perform error correction coding of the encoded moving-image data of the data unit including the new moving-image data, and to control the recording unit so as to record the error correction coded moving-image data of the data unit including the new moving image data onto the recording medium.

2. A recording apparatus according to Claim 1, wherein the coding unit is arranged to encode the moving-image data by selectively using one of an intra-picture coding, a forward predictive coding, and a bi-directional predictive coding, and the wherein the predetermined picture is a picture encoded by intra-picture coding or forward predictive coding.

3. A recording apparatus according to Claim 1, wherein the control unit is further arranged to control the recording unit so as to record null data after the moving image data of the predetermined picture in the data unit in accordance with the recording stop instruction.

4. A recording apparatus according to Claim 1, wherein the control unit is further arranged to control the recording unit, after recording the data of the data unit including the predetermined picture, to record null data on a subsequent plurality of tracks in accordance with the recording stop instruction.

5. A recording apparatus according to Claim 1, wherein the memory unit comprises a plurality of memory banks (ECC1...ECC6), each memory bank arranged to store the encoded moving image data of one data unit, and wherein the coding unit is further arranged to write the encoded image data to the plurality of memory banks sequentially.

6. A recording method for recording moving-image data on a plurality of tracks on a tape-shaped recording medium, the recording method comprising:
receiving moving-image data;
encoding the moving-image data using a predetermined coding system using a variable-length coding;
storing the encoded moving-image data;
performing error correction coding of the stored encoded moving-image data in a data unit corresponding to a predetermined number of tracks;
recording the error correction coded moving-image data onto the recording medium;
stopping a recording process in the data unit after recording the moving-image data of a predetermined picture of the predetermined encoding system in accordance with a recording stop instruction;
storing the moving-image data of the data unit including the moving-image data of the predetermined picture, after the recording stop instruction; and, wherein in the case that recording is recommenced after receiving a recording stop instruction, the method further comprises:
storing new moving-image data adjacent the moving-image data of the predetermined picture stored in the memory unit;
performing error correction coding of the encoded moving-image data of the data unit including the new moving image data; and
recording the error correction coded moving-image data of the data unit including the new moving image data onto the recording medium.

7. A recording method according to Claim 6, wherein the moving-image data is encoded by selectively using one of an intra-picture coding, a forward predictive coding, and a bi-directional predictive coding, and the wherein the predetermined picture is a picture encoded by intra-picture coding or forward predictive coding.

8. A recording method according to Claim 6, further comprising recording null data after the moving image data of the predetermined picture in the data unit in accordance with the recording stop instruction.

9. A recording method according to Claim 6, further comprising recording null data on a subsequent plurality of tracks in accordance with the recording stop instruction after recording the data of the data unit including the predetermined picture.

10. A recording method according to Claim 6, wherein the storing step comprises storing the encoded image data of one data unit in each of a plurality of memory banks, and wherein the method further comprises writing the encoded image data to the plurality of memory banks sequentially.
